# EUROPEAN PATENT APPLICATION

(11) **EP 1 459 664 A1**
(43) Date of publication of application: **22.09.2004**
(21) Application number: 04075682.7
(22) Date of filing: 04.03.2004
(51) Int. Cl.: A47J 37/01, A47J 37/06, A47J 37/10

(54) **Roasting pan**

(30) Priority: 17.03.2003 DK 200300403
(71) Applicant: Benny Petersen Industriservice ApS, 6600 Vejen (DK)
(72) Inventor: Petersen, Benny, 6621 Gesten (DK)
(74) Representative: Elmeros, Claus

(57) **Abstract**

The present invention relates to a roasting pan (2) for the preparation of food products, particularly the oven roasting of meat products, comprising a reservoir for holding liquids. The roasting pan is provided with a device (4) for discharging liquid from the reservoir, which device comprises a tubular member (6) in the bottom part of the reservoir and a tap cooperating with the tubular member for adjustment of the discharge. The roasting pan is characterized in that the tap comprises a rotatable plug (8), which obviates the need for obtaining a firm hold on the hot roasting pan during discharging of liquid, which reduces the risk of spilling hot fat or hot roasting pan bums. Further, a regulation of the discharging is accordingly allowed, both concerning amount and velocity of the discharging.

## Description

The present invention relates to a roasting pan for the preparation of food products, particularly the oven roasting of meat products, comprising a reservoir for holding liquids, wherein the roasting pan is provided with a device for discharging liquid from the reservoir, which device comprises a tubular member in the bottom part of the reservoir and a tap cooperating with the tubular member for adjustment of the discharge.

Generally, in relation to oven preparation of a roast such as a duck or turkey roast, pork roast, or the like, a roasting pan is used, in which the fat from the roast is collected during preparation. The collected fat is often used for other purposes during the preparation of a meal. Moreover, in certain situations the amount of collected fat is of such a magnitude it flows over if not discharged from the roasting pan during preparation.

Accordingly, once in a while it is necessary to take the hot roasting pan containing the roast and the fat out of the oven in order to discharge the fat. Since the roasting typically occurs at around 180-200°C, said activity may involve major risks, if the hot fat is spilled or the roast drops out of the roasting pan, as this may cause significant damage; just as it may be difficult for a person to obtain a firm hold on the roasting pan without the hot roasting pan causing burns.

GB 2291785A describes a roasting pan comprising a device for discharging liquid from the interior of the roasting pan, said device comprising a flexible tubular member, one end of which is attached to the bottom part of the roasting pan, and the other end of which may be turned between an closing upper position over the surface of the liquid in the roasting pan and an opening lower position under this surface, in which latter position discharge may occur. The tubular member may be provided with valve means, which may render cleaning of the tubular member difficult.

Accordingly, the object of the present invention is to provide a better solution in this situation, which renders discharging of the fat from the roasting pan easier and safer.

The invention consists in a roasting pan of the initially mentioned type, in which the tap comprises a rotatable plug.

Hence, the collected liquid may easily be discharged by placing a bowl or the like under the tap on the roasting pan in the oven and open the tap during roasting. This obviates the need for obtaining a firm hold on the hot roasting pan during discharging of liquid, which reduces the risk of spilling hot fat or hot roasting pan burns. Further, a regulation of the discharging is allowed, both concerning amount and velocity of the discharging.

In the preferred embodiment the plug exhibits a cylindrical part being provided with at least one groove exhibiting a helical profile upwards from the bottom of the plug and cooperating with a pin on the inner wall of the tubular member for the retention of the plug inside the tubular member, and above said groove is arranged a seal ring. Hence, the close-fitting of the tap is secured and the discharging may be controlled by the fact that the plug position is guided in the axial direction by means of the guiding groove, which exhibits a substantially helical form. The plug is opened by rotating it, whereby it is displaced upwards in the axial direction.

In order to establish a flow connection from the reservoir downwards and out from under the plug, the plug is in the cylindrical part thereof provided with a flow channel, which connects the side surface of the cylindrical part with the bottom of the plug. Accordingly, the plug is displaced upwards when being opened, whereby the side inlet of the flow channel is brought up to level with the bottom of the reservoir. Then the liquid may flow into the flow channel through the side inlet and down and out through the bottom outlet of the flow channel, under which outlet the liquid may then be collected in a container.

In the preferred embodiment, the plug is provided with a head in which handling means are arranged for the opening and closing of the tap using a handling tool. Accordingly, direct contact with the plug in order to operate the tap may be avoided, which is an advantage since the plug itself is hot, when the tap is operated.

In the preferred embodiment, said handling tool is detachable. A detachable handle allows for keeping said handle generally not subjected to oven temperatures when not in operation, and thus easier to operate.

In the following, the invention will be described in greater detail with reference to the drawings, in which:
Fig. 1 is a perspective view of a roasting pan with a discharging device according to the present invention;
Fig. 2 is a side view of a plug for the discharging device according to the present invention;
Fig. 3 is a front view of the same, and
Fig. 4 is a detailed section view of the bottom of the reservoir in the roasting pan.

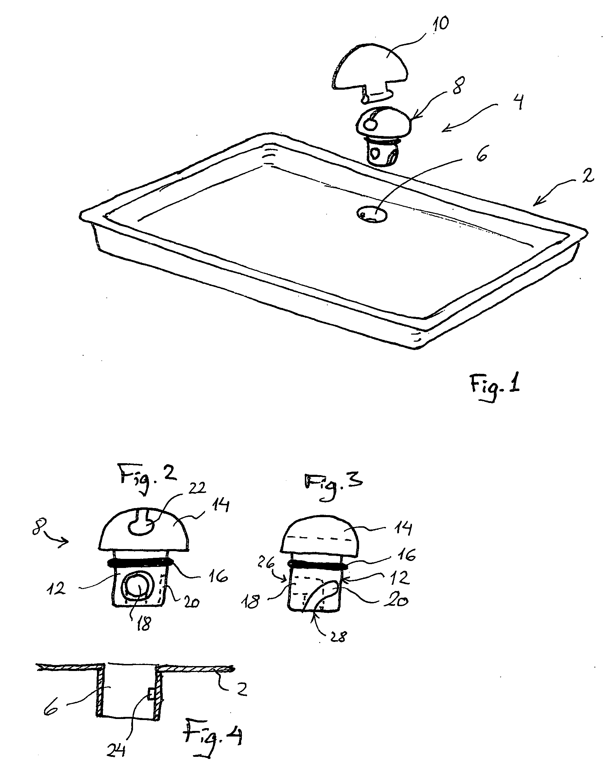

In Fig. 1 is shown a roasting pan 2 provided with a discharging devise 4, which comprises a tubular member 6 being arranged in the bottom of the roasting pan (also referring to Fig. 4), which tubular member also serves as a drainage. The device further comprises a plug 8 cooperating with the tubular member 6 for the closing of the drainage opening and regulating the discharging of liquid from the roasting pan 2, respectively. Operation of the device 4 takes place by rotation of the plug 8 by means of a handling tool 10.

As shown in Fig. 2, the plug 8 exhibits a cylindrical valve part 12 and a head 14. The valve part 12 is provided with a substantially helical formed groove 20 in the side face. Said groove 20 extends in a curving profile from the bottom and up on the side face. When the plug 8 is inserted in the tubular member 6 a projecting pin 24 engage the groove 20 and thus retain the plug 8 in the tubular member 6. Thus, the curvature of the groove will be decisive for the opening of the plug in the tubular member 6 and the pitch of the groove may advantageously be varied such that the plug in the open position also maintains a rest position.

The plug 8 is furthermore provided with a flow channel 18 as is shown in Fig. 2 and 3. This flow channel 18 connects the side face and the bottom of the cylindrical part 12. Above, the cylindrical part is provided with an O-ring 16. The plug 8 is preferably made from stainless steel or similar material, which is suitable in connection with devices for production of food products.

The head 14 of the plug 8 is preferably provided with a transverse undercut groove 22, into which a handling tool may be inserted for the rotation of the plug 8 in relation to the tubular member 6 for opening or closing in order to discharge.

When rotated for opening, the plug 8 is lifted axially by the cooperation between the pin 24 and the groove 20. Accordingly, the seal ring is displaced out of the tubular member 6 and the side inlet 26 of the flow channel 18 is lifted up, such that the liquid in the roasting pan 2 is flowing into the channel 18. The relative side inlet 16 of the channel 18 in respect to the liquid in the roasting pan will accordingly depend upon how much the plug will be "turned up".

A preferred embodiment is described above. By the invention it is realised, that the device for discharging may be designed in many different ways, all being comprised by the following patent claims.

## Claims

1. A roasting pan for the preparation of food products, particularly the oven roasting of meat products, comprising a reservoir for holding liquids, wherein the roasting pan is provided with a device for discharging liquid from the reservoir, which device comprises a tubular member in the bottom part of the reservoir and a tap cooperating with the tubular member for adjustment of the discharge, **characterized in that** the tap comprises a rotatable plug.

2. A roasting pan according to claim 1, wherein the plug exhibits a cylindrical part being provided with at least one groove exhibiting a helical profile upwards from the bottom of the plug and cooperating with a pin on the inner wall of the tubular member for the retention of the plug inside the tubular member, and above said groove is arranged a seal ring.

3. A roasting pan according to claim 2, wherein the plug in the cylindrical part thereof is provided with a flow channel, which connects the side surface of the cylindrical part with the bottom of the plug.

4. A roasting pan according to any of the preceding claims, wherein the plug is provided with a head in which handling means are arranged for the opening and closing of the tap using a handling tool.

5. A roasting pan according to claim 4, wherein said handling tool is detachable.
